# EUROPEAN PATENT SPECIFICATION

(11) **EP 1 237 334 B1**
(45) Date of publication and mention of the grant of the patent: **26.04.2006**
(21) Application number: 02004513.4
(22) Date of filing: 27.02.2002
(51) Int. Cl.: H04L 12/28, H04L 29/06

(54) **Quality of service in wireless LAN**
Quality-of-Service-Datenverkehr in drahtlosen lokalen Netzwerken
Qualité de service dans des réseaux locaux sans fils

(30) Priority: 28.02.2001 US 795539
(43) Date of publication of application: 04.09.2002
(73) Proprietor: SHARP KABUSHIKI KAISHA, Osaka-shi Osaka (JP)
(72) Inventor: Rudnick, William Michael, Beaverton, OR 97006 (US); Kowalski, John Michael, Vancouver, Washington 98683 (US); Kandala, Srinivas, Vancouver, Washington 98683 (US)
(74) Representative: Müller - Hoffmann & Partner

(56) References cited:
- EP-A- 1 117 211
- US-A- 6 049 549
- CROW B P ET AL: "IEEE 802.11 WIRELESS LOCAL AREA NETWORKS" IEEE COMMUNICATIONS MAGAZINE, IEEE SERVICE CENTER. PISCATAWAY, N.J, US, vol. 35, no. 9, 1 September 1997 (1997-09-01), pages 116-126, XP000704431 ISSN: 0163-6804
- RANASINGHE R S ET AL: "Impact of polling strategy on capacity of 802.11 based wireless multimedia LANs" , 28 September 1999 (1999-09-28), pages 96-103, XP010354936
- CROW B P ET AL: "Investigation of the IEEE 802.11 medium access control (MAC) sublayer functions" INFOCOM '97. SIXTEENTH ANNUAL JOINT CONFERENCE OF THE IEEE COMPUTER AND COMMUNICATIONS SOCIETIES. DRIVING THE INFORMATION REVOLUTION., PROCEEDINGS IEEE KOBE, JAPAN 7-11 APRIL 1997, LOS ALAMITOS, CA, USA,IEEE COMPUT. SOC, US, 7 April 1997 (1997-04-07), pages 126-133, XP010252020 ISBN: 0-8186-7780-5
- "IEEE standard Part 11: wireless LAN medium access control (MAC) and physical layer (PHY) specification. (ISO/IEC 8802-11, ANSI/IEEE Std 802.11-1999) Chapter 9: MAC sublayer functional description" ISO/IEC 8802-11 ANSI/IEEE STD 802.11, XX, XX, 20 August 1999 (1999-08-20), pages 70-97, XP002207974

## Description

### Related Application

This application is related to United States Provisional Patent Application Serial No. 60/245,546, filed November 2, 2000, for *Method to dynamically adapt both modifiable and non-modifiable parameters of a wireless data network;* to United States Provisional Patent Application Serial No. 60/245,646, filed November 2,2000, for *Automated method to dynamically change channels in a wireless data network;* and to U. S. Patent Application Serial No. 09/800,334, filed March 5, 2001, for *Method to dynamically change all MIB parameters of a wireless data network.*

### Field of the Invention

This invention relates to Quality of Service improvements in wireless LAN systems, and specifically to quality of service enhancements in the IEEE 802.11 WLAN standard.

### Background of the Invention

The IEEE's standard for wireless LANs, designated IEEE 802.11, provides two different ways to configure a network: ad-hoc and infrastructure. In an ad-hoc network, computers form a network "on the fly," with each computer or 802.11 device joining the network is able to send and receive signals. There is no defined structure in an ad-hoc network; there are no fixed points; and every node in the network is able to communicate with every other node in the network. Although it may seem that order would be difficult to maintain in this type of network, sufficient algorithms, such as the spokesman election algorithm (SEA), are provided and are designed to "elect" one machine as the base, or master, station of the network, with the others machines being "slaves." Another algorithm in ad-hoc network architectures uses a broadcast and flooding method to all other nodes to establish the identity of all nodes in the network.

The infrastructure architecture provides fixed network access points for communications with mobile nodes. These network access points (APs) are sometime connected to land lines to widen the LAN's capability by bridging wireless nodes to other wired nodes. If service areas overlap, handoffs may occur between wireless LANs. This structure is very similar to that used in cellular networks.

The IEEE 802.11 standard places specifications on the parameters of both the physical (PHY) and medium access control (MAC) layers of the network. The PHY layer, which actually handles the transmission of data between nodes, may use either direct sequence spread spectrum, frequency-hopping spread spectrum, or infrared (IR) pulse position modulation. IEEE 802.11 makes provisions for data rates of up to 11 Mbps, and requires operation in the 2.4 - 2.4835 GHz frequency band, in the case of spread-spectrum transmission, which is an unlicensed band for industrial, scientific, and medical (ISM) applications; and in the 300 - 428,000 GHz frequency band for IR transmission. Infrared is generally considered to be more secure to eavesdropping, because IR transmissions require absolute line-of-sight links, *i.e.,* no transmission is possible outside any simply connected space or around corners, as opposed to radio frequency transmissions, which can penetrate walls and be intercepted by third parties unknowingly. However, infrared transmissions can be adversely affected by sunlight, and the spread-spectrum protocol of 802.11 does provide some rudimentary security for typical data transfers. The 802.11b physical layer (PHY) provides data rates up to 11 Mbps using a direct sequence spread spectrum (DSSS) approach; while 802.11a provides data rates up to 54 Mbps using an orthogonal frequency division multiplex (OFDM) approach.

The MAC layer includes a set of protocols which is responsible for maintaining order in the use of a shared medium. The 802.11 standard specifies a carrier sense multiple access with collision avoidance (CSMA/CA) protocol. In this protocol, when a node receives a packet to be transmitted, it first listens to ensure no other node is transmitting. If the channel is clear, it then transmits the packet. Otherwise, it chooses a random "backoff factor," which determines the amount of time the node must wait until it is allowed to transmit its packet. During periods in which the channel is clear, the transmitting node decrements its backoff counter. When the channel is busy it does not decrement its backoff counter. When the backoff counter reaches zero, the node transmits the packet. Because the probability that two nodes will choose the same backoff factor is small, collisions between packets are minimized. Collision detection, as is employed in Ethernet®, cannot be used for the radio frequency transmissions of IEEE 802.11, because when a node is transmitting, it cannot hear any other node in the system which may be transmitting, because its own signal will block any other signals arriving at the node. Whenever a packet is to be transmitted, the transmitting node may first send out a short ready-to-send (RTS) packet containing information on the length of the packet. If the receiving node hears the RTS, it responds with a short clear-to-send (CTS) packet. After this exchange, the transmitting node sends its packet. When the packet is received successfully, as determined by a cyclic redundancy check (CRC), the receiving node transmits an acknowledgment (ACK) packet. This back-and-forth exchange is necessary to avoid the "hidden node" problem, *i.e.,* node A can communicate with node B, and node B can communicate with node C. However, node A cannot communicate node C. Thus, for instance, although node A may sense the channel to be clear, node C may in fact be transmitting to node B. The protocol described above alerts node A that node B is busy, and requires node A to wait before transmitting its packet.

Although 802.11 provides a reliable means of wireless data transfer, some improvements to it have been proposed. The use of wireless LANs is expected to increase dramatically in the future as businesses discover the enhanced productivity and the increased mobility that wireless communications can provide.

IEEE Standard 802.11 (1999) for wireless local area networks (WLAN) does not support Quality of Service (QoS) traffic delivery in its MAC layer. A method to provide Quality of Service traffic delivery for IEEE Standard 802.11 WLAN systems is desirable to enhance communications reliability for 802.11 devices.

There is an 802.11 Task Group e (TGe) joint proposal to support QoS enhancements. Virtual streams having QoS parameter values including priority, data rate, delay bounds and jitter bounds, are supported. The proposal uses an enhanced point coordinator (PC) function (EPCF), featuring centralized contention control for sending reservation request frames to request new bandwidth allocations. Several new data and management frames are used. New acknowledgement policies, direct station-to-station transfers, basic service set (BSS) overlap management, and dynamic wireless repeater functions are included. This proposal requires modification of the existing 802.11 standard, and may not support, or be supported by, legacy 802.11 devices.

The subject IEEE standard is set forth in ISO/IEC 8802:1999(E) IEEE Std 802.11, 1999 edition, International Standard [for] Information Technology - Telecommunications and information exchange between systems-Local and metropolitan area networks - Specific Requirements - Part11: Wireless LAN Medium Access Control (MAC) and Physical Layer (PHY) specifications.

QoS issues are discussed in the following references:
U.S. Patent No. 6,049,549 to Ganz *et al.,* granted April 11, 2000, for *Adaptive medium control,* describes an approach to QoS having a polling manager, which uses "just in time" polling based on allocated bandwidth, and a resource manager, which provides admission control and allocates network resources.
U.S. Patent No. 5,970,062 to Bauchot, granted October 19, 1999, for *Method and apparatus for providing wireless access to an ATM network,* describes an ATM MAC approach to QoS.
U.S. Patent No. 5,787,080 to Hulyalkar *et al.,* granted July 28, 1998, for *Method and apparatus for reservation-based wireless ATM local area network,* describes a reservation-based mobile wireless MAC-arbitrated QoS method for use with automated teller machines. The techniques is not compatible with packet-data WLANs.
U.S. Patent No. 5,745,480 to Behtash *et al.,* granted April 28, 1998, for *Multi-rate wireless communications system,* describes a communication-negotiated QoS for use in a wireless radio system provided by directly modifying the encoding used to allocate the desired bandwidth, however, such a system is not compatible with packet-data WLANs.

Further information pertaining to the prior art can be found in Crow, B. P. *et al.,* "IEEE 802.11 Wireless Local Area Networks," IEEE Communications Magazine. IEEE Service Center. Piscataway, N.J., USA, vol. 35, no. 9, September 1^{st}. 1997, pages 116-126, XPO00704431, ISSN: 0163-6804, which has been interpreted by the European Patent Office as disclosing a method of prioritizing communication among wireless network stations in a network, comprising including at least one wireless network station in a priority group and using said priority group to identify stations for prioritized communication.

Ranashinghe, R.S. *et al.*, "Impact of Polling Strategy on Capacity of 802.11 Based Wireless Multimedia LANs." September 28^{th}, 1999, pages 96-103, XP010354936 presents a distributed fair queuing scheme that is compatible with the 802.11 standard and can manage bandwidth allocation for delay sensitive traffic.

Crow, B. P. *et al*., "Investigation of the IEEE 802.11 Medium Access Control (MAC) Sublayer Functions," Infocom '97, Sixteenth Annual Joint Conference of the IEEE Computer and Communications Societies, Driving the Information Revolution, Proceedings IEEE, Kobe. Japan, April 7^{th}-11^{th}, 1997, Los Alamitos, CA USA, IEEE Comput. Soc., US, April 7^{th}, 1997, pages 126-133, XPO10252020, ISBN:0-88186-7780-5 discusses performance simulations of the medium access control (MAC) sublayer of a draft IEEE 802.11 wireless local area network, wherein the MAC sublayer consists of a Distributed Coordination Function (DCF) and a Point Coordination Function (PCF).

EP 1 117 211 teaches methods and systems for weighted polling of terminals in a Wireless Local Area Network (WLAN), wherein Quality of Service (QoS) information related to the WLAN terminals is obtained. A weighted polling factor may be assigned to each WLAN terminal based on the QoS information. Each WLAN terminal may be polled during a transmission period based on the weighted polling factor assigned to each WLAN terminal.

### SUMMARY OF THE INVENTION

The present invention provides a method of providing Quality of Service (QoS) in a wireless LAN in accordance with independent claim 1. Preferred embodiments of the invention are reflected in the dependent claims.

An object of the invention is to provide increased quality of service for devices operating in accord with the IEEE 802.11 wireless LAN standard.

Another object of the invention is to provide a method of multi-tier prioritization in a wireless LAN network.

This summary and objectives of the invention are provided to enable quick comprehension of the nature of the invention. A more thorough understanding of the invention may be obtained by reference to the following detailed description of the preferred embodiment of the invention in connection with the drawings.

### Brief Description of the Drawings

Fig. 1 is a block diagram of a BSS incorporating the method of the invention.

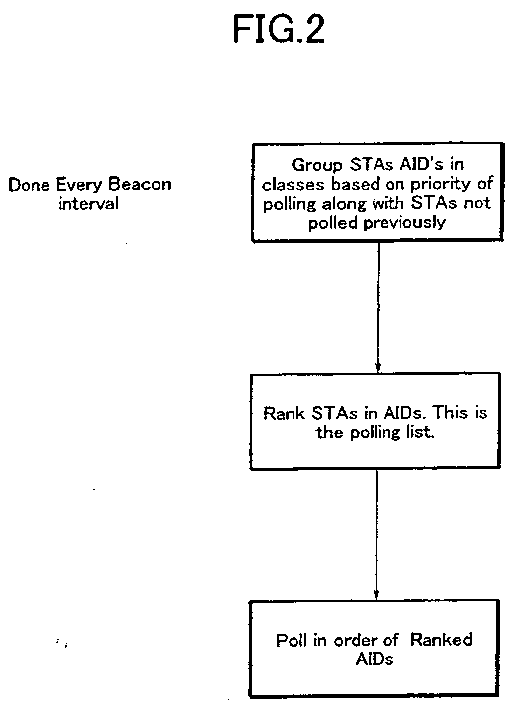

Fig. 2 is a flowchart of polling list algorithm.

### Detailed Description of the Preferred Embodiments

The IEEE 802.11 wireless LAN (WLAN) standard provides a point coordinator function/distributed coordinator function (PCF/DCF) distinction as its only differentiated service. A two-class differential service may be based upon the PCF/DCF distinction and will provide limited Quality of Service (QoS). The invention disclosed herein provides a method to provide QoS traffic delivery for IEEE Standard 802.11 WLAN PCF mechanisms by use of the contention free period (CFP) established in the 802.11 standard. The primary distinction of the method of the invention is that many classes of service may be provided and each class of service may be assigned an arbitrary proportion of the available transmit opportunities.

The aforementioned TGe joint proposal significantly extends the current 802.11 specification to support a rich, full-featured QoS, at the cost of considerable additional complexity and overhead. The method of the invention provides a differentiated-services type QoS, requiring minimal change to the current 802.11 specification, and imposes minimal additional complexity. The method of the invention is simple to implement, yet provides adequate QoS for many 802.11 applications, and supports legacy devices as well.

WLAN under 802.11 is instantiated through a basic service set (BSS). The BSS is the WLAN analogue of a wired local area network. An infrastructure BSS, usually referred to simply as a BSS, has an access point (AP) which serves as a central coordinator for the BSS. An independent basic service set (IBSS), used in an ad-hoc network, has no AP, *i.e.,* no central coordinator. The AP tasks in a IBSS are shared among the stations (STAs) comprising the IBSS. A BSS is identified by its BSS IDentification (BSSID) value.

As used herein, "BSS" means an infrastructure BSS, vs. an Independent BSS, unless otherwise noted. All references to clauses, annexes and 802.11 refer to the ISO/IEC 8802-11 (ANSI/IEEE Std 802.1) 1999 document "Information technology - Telecommunications and information exchange between system - Local and metropolitan area networks - Specific requirements - Part 11: Wireless LAN Medium Access Control (MAC) and Physical (PHY) specifications."

Under 802.11, timing is coordinated across the BSS by broadcasting a beacon frame at a specified time interval. The time at which the beacon should be sent is called the Target Beacon Transmit Time (TBTT). Selected beacons include a Delivery Traffic Indication Message (DTIM) field, used to indicate pending traffic on a station-specific basis.

All time in an 802.11 WLAN may be broken into contention periods (CP), when more than one device may attempt to send data, and contention-free periods (CFP), when no or one device attempts to send data. Access to the wireless media during the CFP is controlled by a centralized PCF, residing in an AP STA. There may be no more than one AP in a BSS. Wireless media access during the CP uses distributed contention resolution and runs under DCF rules.

A beacon with a DTIM is used to begin the CFP. During the CFP, the PCF polls contention-free pollable (CF-pollable) STAs, drawn in association ID order (AID-order), from a polling list. The PCF maintains the polling list in AID-value order, beginning with smallest value.

For some traffic streams, low jitter, low latency, and high throughput are particularly important. Examples of such traffic streams include interactive audio and video applications, such as telephony and video conferencing. The existing 802.11 standard does not specifically provide the ability to support low jitter, low latency, and high throughput via policy decision, except by deploying very sparsely populated WLANs, e.g., one remote STA per WLAN, which is not a satisfactory solution.

The method of the invention includes the use of the algorithm detailed in 802.11 standard clause 9.3.4.1, paragraph 1, sentence 2, in a novel way to implement multi-tier prioritization of transmission opportunities based on the identity of the sending or receiving STA. This effects a rudimentary form of QoS. Ideally, admission-controlled allocation of bandwidth should be used to implement priority-based QoS. However, because the size of frames which are transferred under 802.11 is largely outside the control of the AP, and because the size of frames have an upper size limit, transmission opportunities, which-may be controlled, are used as a proxy for bandwidth. In cases where a major difference exists between bandwidth and transmission opportunities, the AP may make an adjustment to the allocated frequency of transmission opportunities to compensate for the differences.

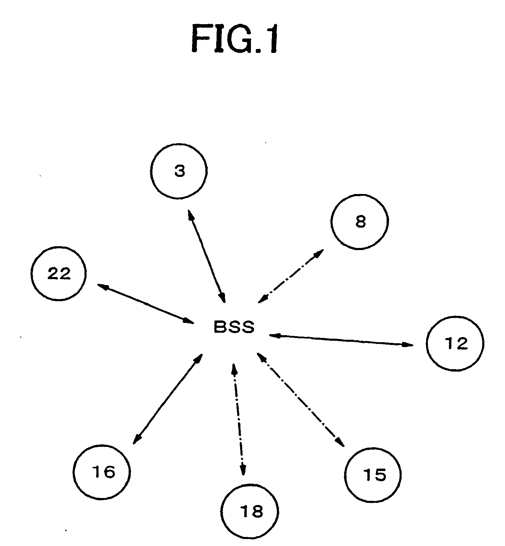

802.11 requires a subset of the polling list to be polled during each CFP in an order determined by ascending AID value. As used in the 802.11 standard, "subset" is not used in the mathematical sense of any of the polling list, rather, it is used as a sequence of less than all of the total polling list, and, as such, really means a "sub-sequence," as all STAs are taken in AID-value order. Each CF-Poll provides a single CF-Pollable STA an opportunity to send a single fragment, wherein a fragment is synonymous with a medium access control (MAC) protocol data unit, or MPDU, and to receive a single fragment. The method of the invention is based on the fact that any selection of STAs on the polling list constitutes a mathematical-like subset of the polling list, and therefore satisfies the algorithm criteria specified in 802.11 section 9.3.4.1. The subset chosen need not consist of contiguous or adjacent STA AID values. For example, and now referring to Fig. 1, if the STAs whose AIDs are 3,8,12,15,16,18, and 22 are on the polling list, the subset of STAs selected might be {8, 15, and 18}. These would be the high-priority STAs which require QoS communications. 802.11 requires the subset to be polled in order of ascending AID value, so the polling order of the subset will begin with the STA whose AID value is 8, followed by the STA whose AID value is 15, and then finally the STA whose AID value is 18. A sub-sequence under 802.11 does not permit any STAs in the polling list to be polled out of AID-value order. Thus, if the method of the invention were used without modifying the 802.11 polling criteria, the sub-sequence might be {3, 8, 12} in a single CFP, thereby missing two of the three high-priority STAs.

During a single CFP, after all STAs on the polling list have been polled, and all CF frames have been delivered, 802.11 allows the PC to generate additional CF-Polls to any STAs on the polling list and/or additional data or management frames may be sent to any STAs. Thus, once the polling list subset, *i.e*., the active polling list subset, has been polled, if any STAs on the entire polling list have been skipped, *i.e.,* were not included in the polling list subset, nothing more may be done during the CFP, because all STAs on the entire polling list have not been polled in AID value order. There is, however, an exception in the case where the polling list subset consists of some prefix sequence of the ordered list of the AIDs of all STAs on the polling list. In this exceptional case, the remainder of the polling list may be polled in AID-value order, followed by additional polls and/or data/management frame transfers. However, because most of the time, when a polling list subset is selected based upon current priority needs, a gap will occur, and a polling list STA will be skipped.

Returning to the normal case, presumably the PC will then end the CFP so that DCF transfers may take place. For ordinary CFP transfers this may be a problem, limiting the number of CFP polls performed, but is used in the method of the invention for implementing priority-based QoS. Under the method of the invention, it is desirable to make the CFPs short but frequent, *i.e.,* only about as long as needed to CF-Poll the high-priority-traffic STAs. By doing so, the high-priority-traffic STAs are given access to a larger portion of the available transmission opportunities.

It is desirable that the CFP be only slightly longer than the time needed to service (CF-Poll) the high-priority STAs. It is also desirable that CFPs happen as often as possible so as to maximize the portion of the available transmission opportunities allocated to high-priority-traffic STAs. These goals may be accomplished by properly setting various 802.11 system parameters residing in the MAC management information base (MIB) of the AP, including:
dot11CFPMaxDuration;
dot11CFPPeriod;
dot11BeaconPeriod; and
dot11DTIMPeriod.

It is understood that the simple act of the PC sending the CF-End frame may make the CFP shorter, however, the CFP may not be made longer than the value set as dot11CFPMaxDuration, and the dot11CFPMaxDuration parameter is fixed for the life of the BSS when the BSS is first created. To allocate a larger portion of available transmission opportunities to the highest-priority-traffic STAs, the dot11CFPPeriod, dot11BeaconPeriod, and dot11DTIMPeriod parameters must be set so that the time from the start of one CFP to the start of the next CFP period is relatively small, but at least long enough so that at least one potentially max-sized frame may be transmitted and acknowledged (ACK'd) by each selected high-priority STA during a CFP. Because the dot11CFPPeriod parameter is fixed for the life of the BSS when the BSS is first created, this may be difficult to achieve. As STAs move among the priority levels, the size of the polling list subset, *i.e.,* the frequently serviced STAs, will change, eventually necessitating a change to the max duration and/or frequency of the CFP. The remaining problem is that dot11CFPMaxDuratian is also fixed for the life of the BSS when the BSS is first created.

To circumvent these limitations, the terminate and reconvene (TAR) and/or dynamic change channel (DCC) methods, described in the above-identified related applications, may be used to terminate and reconvene the BSS in an automated fashion. When the BSS is restarted, new values may be set for dotllCFPPeriod and dot11CFPMaxDuration, as well as for dot11BeaconPeriod and dot11DTIMPeriod, thereby dynamically adjusting the size and frequency of the CFP as the bandwidth and/or other requirements of the QoS priority queues change. Alternately, minor changes in the CFP duration and frequency, may be made by adjusting only the dot11BeaconPeriod and dot11DTIMPeriod parameters, thereby avoiding the overhead associated with performing a TAR cycle.

Details regarding how a STA changes its priority level are not directly relevant to the multi-tier prioritization method described here, however, changes in STA priority may be made using three new messages, as follows: To change a STA's priority, the STA sends a priority request (PR) message to the AP. The AP contains a scheduler. The AP's scheduler responds with a priority grant (PG) message to the STA. After the STA acknowledges the PG, the AP/scheduler/PC moves the STA to the specified priority class and traffic for the STA to the corresponding priority queue. Similarly, the AP may initiate a change in STA priority as follows: the AP's scheduler verifies bandwidth is available. It then sends a priority change notice (PCN) to the STA. After the STA acknowledges the PCN, the AP/scheduler/PC moves the STA to the specified priority queue. Of course, other signaling and control methods are possible.

Note that one or more low-priority STAs may be included in the CF-Polling list subset polled during a CFP on a rotating basis to prevent starvation. An 802.11 device will typically be connected to a wired LAN at some point in the network, and the QoS-enabled wired LAN negotiates the QoS depending on the nature of the data being transmitted by the 802.11 device. The provision of QoS transmission is dependent on the nature of the STA's device. An LCD television, for instance, will require QoS. The admission of such a device to the BSS brings with it the need for QoS transmission, as identified by the wired LAN.

Multi-tier priority-based QoS is implemented by controlling how frequently each STA appears in the polling list subset, and therefore, how frequently each STA receives a transmission opportunity. For example, suppose the band-width manager (BM) wanted to effect three priority levels, p1, p2, and p3, with p1 getting 50% of the available bandwidth, p2 getting 33%, and p3 getting the remaining 17%. Further, suppose the STA whose AID is 8 is the sole member of p1, the STA whose AID is 15 is the sole member of p2, and the STA whose AID is 18 is the sole member of p3. The following sequence of polling list subsets is one implementation of the desired priority relationships: {8}, {8,15}, {8,15,18}. This implementation accomplishes the desired allocation of transmission opportunities and, if all packets are of similar size, bandwidth as shown in the Table 1:

**Table 1**

| STA | Transmission Opportunities | % Transmission Opportunities | % Bandwidth |
|---|---|---|---|
| 8 | 3 | 50% | 50% |
| 15 | 2 | 33% | 33% |
| 18 | 1 | 17% | 17% |

However, if the BM detects that STA 8 packets are, on average, only half the size of STA 15 and STA 18 packets, the BM may adjust the allocation of transmission opportunities to compensate as follows: {8}, {8}, {8}, {8,15}, {8}, {8,15,18}. This accomplished the desired 50%, 33%, 17% allocation of bandwidth to STAs 8, 15, and 18, respectively, as shown in Table 2:

**Table 2**

| STA | Transmission Opportunities | % Transmission Opportunities | % Bandwidth |
|---|---|---|---|
| 8 | 6 | 67% | 50% |
| 15 | 2 | 22% | 33% |
| 18 | 1 | 11% | 17% |

A simple implementation of the method of the invention is to make the granularity of prioritization the STA. In this implementation, a STA with both high-priority and low-priority traffic will become a high-priority STA, depending upon policy. This means the low-priority traffic gets a free high-priority ride along with the high-priority traffic. The exact trade-off made is a policy decision and is implementation dependent. Another, albeit more complex, approach is to segregate traffic flows and make the granularity of prioritization the flow rather than the STA.

Finally, if the desire were to arise, AID values may be changed during the association phase of the TAR cycle. This could be used as a queuing algorithm simplification to give the highest priority STAs the lowest AIDS, which is useful under heavy load conditions when there is not time to serve the entire high-priority queue polling list subset of the polling list during a single CFP.

Thus, a method for providing QoS in IEEE 802.11 devices has been disclosed. It will be appreciated that further variations and modifications thereof may be made within the scope of the invention as defined in the appended claims.

## Claims

1. A method of providing Quality of Service (QoS) in a wireless LAN system, wherein plural stations constitute a wireless LAN network, wherein some of the stations are identified as high-priority stations requiring QoS, and wherein the wireless LAN network includes a protocol providing for contention periods and contention free periods, comprising the step of:
grouping the stations into a polling list set;
**characterized by** the steps of:
selecting a number of the gouped stations for inclusion in a polling list subset, wherein preference for selecting stations from the polling list is given to stations which are identified as high-priority QoS stations; and
polling the stations included in said polling list subset during a contention free period.

2. The method of claim 1 wherein said selecting includes including stations in the polling list subset as a function of the data transmitted by such stations.

3. The method of claim 1 wherein said polling includes setting the time period between successive contention free periods to be greater than the contention free period.

4. The method of claim 1 wherein said selecting includes varying the stations selected for inclusion in the polling list subset.

5. The method of claim 1, wherein the wireless LAN is connected with a wired LAN; and
said selecting includes including stations in the polling list subset as a function of the data transmitted by such stations as determined by functionalities in the wired LAN.

6. The method of claim 1 wherein said wireless network complies with the ANSI/IEEE 802.11 Standard.

## Patentansprüche

1. Verfahren zum Bereitstellen von Quality-of-Service (QoS)-Datenverkehr in einem drahtlosen LAN-System, in dem mehrere Stationen ein drahtloses LAN-Netzwerk bilden, wobei einige der Stationen als solche hoher Priorität, die QoS benötigen, **gekennzeichnet** sind, und wobei dieses drahtlose LAN-Netzwerk ein Protokoll enthält, das zu Konkurrenzperioden und konkurrenzfreien Perioden führt, mit dem folgenden Schritt:
- Gruppieren der Stationen in eine Rundabfrageliste-Gruppe; **gekennzeichnet durch** die folgenden Schritte:
- Auswählen einer Anzahl der gruppierten Stationen für Einschluss in eine Rundabfrageliste-Untergruppe, wobei bei der Auswahl von Stationen aus der Rundabfrageliste denjenigen Stationen der Vorzug gegeben wird, die als QoS-Stationen hoher Priorität **gekennzeichnet** sind; und
- für die in dieser Rundabfrageliste-Untergruppe enthaltenen Stationen während einer konkurrenzfreien Periode eine Rundabfrage ausgeführt wird.

2. Verfahren nach Anspruch 1, bei dem es zum Auswählen gehört, Stationen als Funktion der durch derartige Stationen gesendeten Daten in die Rundabfrageliste-Untergruppe einzuschließen.

3. Verfahren nach Anspruch 1, bei dem es zur Rundabfrage gehört, die Zeitperiode zwischen aufeinanderfolgenden konkurrenzfreien Perioden größer als die konkurrenzfreie Periode einzustellen.

4. Verfahren nach Anspruch 1, bei dem es zum Auswählen gehört, die zum Einschluss in die Rundabfrageliste-Untergruppe ausgewählten Stationen zu variieren.

5. Verfahren nach Anspruch 1, bei dem das drahtlose LAN mit einem leitungsgebundenen LAN verbunden wird und es zum Auswählen gehört, Stationen als Funktion der Daten, wie sie durch derartige Stationen gesendet werden, wie es durch Funktionsmöglichkeiten im leitungsgebundenen LAN festgelegt ist, in die Rundabfrageliste-Untergruppe einzuschließen.

6. Verfahren nach Anspruch 1, bei dem das drahtlose Netzwerk dem Standard ANSI/IEEE 802.11 genügt.

## Revendications

1. Procédé pour fournir une qualité de service (QoS) dans un système LAN sans fil, dans lequel plusieurs stations constituent un réseau LAN sans fil, dans lequel certaines des stations sont identifiées comme des stations à priorité élevée nécessitant une qualité de service, et dans lequel le réseau LAN sans fil comprend un protocole fournissant des périodes de contention et des périodes sans contention, comprenant l'étape consistant à:
grouper les stations dans un ensemble de liste d'appel ;
**caractérisé par** les étapes consistant à :
sélectionner un certain nombre de stations groupées pour les inclure dans un sous-ensemble de liste d'appel, dans lequel une préférence pour sélectionner des stations à partir de la liste d'appel est donnée aux stations qui sont identifiées comme des stations à priorité élevée nécessitant une qualité de service ; et
appeler les stations incluses dans ledit sous-ensemble de liste d'appel durant une période sans contention.

2. Procédé selon la revendication 1, dans lequel ladite sélection comprend l'étape consistant à inclure des stations dans le sous-ensemble de liste d'appel en fonction des données transmises par ces stations.

3. Procédé selon la revendication 1, dans lequel ledit appel comprend l'étape consistant à fixer la période de temps entre des périodes sans contention successives de manière à ce qu'elle soit supérieure à l'une de ces dernières.

4. Procédé selon la revendication 1, dans lequel ladite sélection comprend l'étape consistant à varier les stations sélectionnées pour être incluses dans le sous-ensemble de liste d'appel.

5. Procédé selon la revendication 1, dans lequel le LAN. sans fil est connecté à un LAN câblé; et dans lequel ladite sélection comprend l'étape consistant à inclure des stations dans le sous-ensemble de liste d'appel en fonction des données transmises par ces stations comme déterminé par les fonctionnalités du LAN câblé.

6. Procédé selon la revendication 1, dans lequel ledit réseau sans fil est conforme à la norme ANSI/IEEE 802.11.
